# EUROPÄISCHE PATENTSCHRIFT

(11) **EP 1 248 952 B1**
(45) Veröffentlichungstag und Bekanntmachung des Hinweises auf die Patenterteilung: **27.08.2008**
(21) Anmeldenummer: 00989841.2
(22) Anmeldetag: 09.12.2000
(51) Int. Cl.: G01P 15/08, B81C 1/00, B81B 3/00

(54) **MIKROMECHANISCHE STRUKTUR, INSBESONDERE FÜR EINEN BESCHLEUNIGUNGSSENSOR ODER DREHRATENSENSOR, UND ENTSPRECHENDES HERSTELLUNGSVERFAHREN**
MICROMECHANICAL STRUCTURE, IN PARTICULAR FOR AN ACCELERATION SENSOR OR YAW RATE SENSOR AND A CORRESPONDING METHOD FOR PRODUCING THE SAME
STRUCTURE MICROMECANIQUE, EN PARTICULIER POUR UN CAPTEUR D'ACCELERATION OU UN CAPTEUR DE VITESSE DE ROTATION, ET PROCEDE DE PRODUCTION CORRESPONDANT

(30) Priorität: 07.01.2000 DE 10000368
(43) Veröffentlichungstag der Anmeldung: 16.10.2002
(73) Patentinhaber: ROBERT BOSCH GMBH, 70442 Stuttgart (DE)
(72) Erfinder: FRANZ, Jochen, 72762 Reutlingen (DE); ILLING, Matthias, 72127 Kusterdingen (DE); HENNING, Frank, 72766 Reutlingen (DE); FISCHER, Frank, 72810 Gomaringen (DE); HEIN, Peter, 72770 Reutlingen (DE)
(86) Internationale Anmeldenummer: PCT/DE2000/004379
(87) Internationale Veröffentlichungsnummer: WO 2001/050137

(56) Entgegenhaltungen:
- EP-A- 0 766 090
- DE-A- 19 700 290
- DE-A- 19 719 601
- US-A- 5 760 455

## Beschreibung

### STAND DER TECHNIK

Die vorliegende Erfindung betrifft eine mikromechanische Struktur, insbesondere für einen Beschleunigungssensor oder Drehratensensor, mit einem Substrat, welches eine Verankerungseinrichtung aufweist und einer Schwungmasse, die über eine Biegefedereinrichtung mit der Verankerungseinrichtung verbunden ist, so daß die Schwungmasse elastisch aus ihrer Ruhelage auslenkbar ist. Ebenfalls schafft die Erfindung ein entsprechendes Herstellungsverfahren.

Obwohl auf beliebige mikromechanische Strukturen anwendbar, werden die vorliegende Erfindung und die ihr zugrundeliegende Problematik in bezug auf eine mikromechanische Wippenstruktur für einen Beschleunigungssensor oder Drehratensensor erläutert.

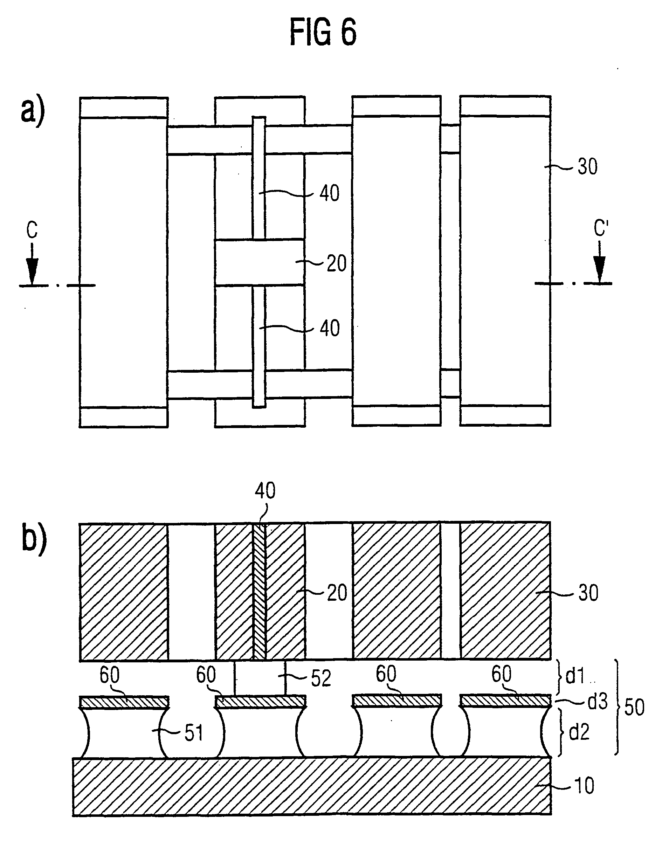

Fig. 6 zeigt eine schematische Draufsicht auf eine bekannte mikromechanische Struktur in Form einer Wippenstruktur für einen Beschleunigungssensor oder Drehratensensor, und zwar Fig. 6a in Draufsicht und Fig. 6b im Schnitt entlang der Linie C-C'.

Beschleunigungs- bzw. Drehratensensoren in Mikromechaniktechnologie sind allgemein bekannt. Die Funktionsweise und der prinzipielle Aufbau eines Beschleunigungssensors basiert auf einer elastischen Vertikalempfindlichkeit, also einer Detektionsrichtung auf Beschleunigung senkrecht zur Chip-Ebene.

Die Struktur gemäß Fig. 6 umfaßt ein Substrat 10, welches eine Verankerungseinrichtung 20 aufweist, und eine Schwungmasse 30 in Form einer Wippe mit Längs- und Querbalken sowie entsprechenden Zwischenräumen, die über eine Biegefedereinrichtung 40 mit der Verankerungseinrichtung 20 verbunden ist, so daß die Schwungmasse 30 elastisch aus ihrer Ruhelage auslenkbar ist.

Durch Ätzen einer unter der Schwungmasse 30 liegenden Opferschicht 50 ist diese Auslenkbarkeit realisierbar. Die Opferschicht 50 besteht aus einer unteren Opferteilschicht 51 und einer oberen Opferteilschicht 52, zwischen denen Elektrodenbereiche 60 vorgesehen sind, welche elektrostatisch mit der Schwungmasse 30 zusammenwirken.

Durch diesen Aufbau liegt die Opferschicht 50 in einem unter der Schwungmasse 30 befindlichen ersten Bereich in einer ersten ätzbaren Dicke d1 vor, und in einem unter der Schwungmasse 30 befindlichen zweiten Bereich in einer zweiten ätzbaren Dicke d1+d2+d3, wobei die zweite Dicke d1+d2+d3 größer als die erste Dicke d1 ist.

Bei diesem Bauelement liegen also die beweglichen Komponenten in einer oberen elektromechanisch funktionalen Ebene und sind aus epitaktischem Polysilizium. Darunter liegt in einem Abstand, der im wesentlichen der Opferteilschichtdicke d1 entspricht, eine zweite elektrisch funktionale Ebene aus dotiertem Silizium, die als kapazitive Gegenelektrode zur oberen Funktionsschicht wirkt.

Dieser grundlegende Schichtaufbau eines derartigen vertikal empfindlichen Beschleunigungssensors ist entlang der Linie C-C' in Fig. 6b erkennbar. Die Opferschicht 50 wurde in gemäß Fig. 6b bereits selektiv entfernt. Stehengelassen ist die Opferteilschicht 52 im Bereich der Verankerungseinrichtung, um diese mit den darunterliegenden Schichten 60, 51 und so mit dem Substrat 10 zu verbinden.

Zur Herstellung dieser Struktur wird die Opferteilschicht 51 auf dem darunterliegenden Substrat 10 mit einem CVD-Verfahren mit Schichtdicke d3 abgeschieden. Darauf wird die Elekzrodenschicht aus dotiertem Silizium mit Schichtdicke d2 abgeschieden und zur Bildung der Elektrodenbereiche 60 strukturiert. Danach wird die Opferteilschicht 52 auf den darunterliegenden Elektrodenbereichen 60 bzw. der Opferteilschicht 51 mit dem CVD-Verfahren mit Schichtdicke d1 abgeschieden. Schließlich wird die Schwungmasse 30 aus einer Epitaxie-Polysiliziumschicht gebildet und die Opferschicht 50 zur Realisierung der Auslenkbarkeit geätzt.

Bei der Ätzung der Opferschicht 50, d.h. der Opferteilschichten 51, 52, werden die Elektrodenbereiche 60 nicht angegriffen, so daß die als Tiefenätzstopp wirken. Hingegen schreitet die Ätzung zwischen den Elektrodenbereichen 60 bis zum Substrat 10 voran.

Die Schichtdicke der CVD-Opferteilschichten 51, 52 beträgt in der Regel zwischen 2,0 µm und 1,0 µm. Sie werden üblicherweise aus TEOS-Oxid (von Tetraethoxysilan), aber auch aus Silan-Oxid erzeugt.

Die Herstellung von TEOS verläuft über folgende chemische Reaktion:

Si (OC₂H₅) 4 → SiO₂ + organische Reaktionsprodukte

Die Herstellung von Silan-Oxid verläuft über die Reaktion:

SiH₄ + 4N₂O → SiO₂ + 4N₂ + 2H₂O

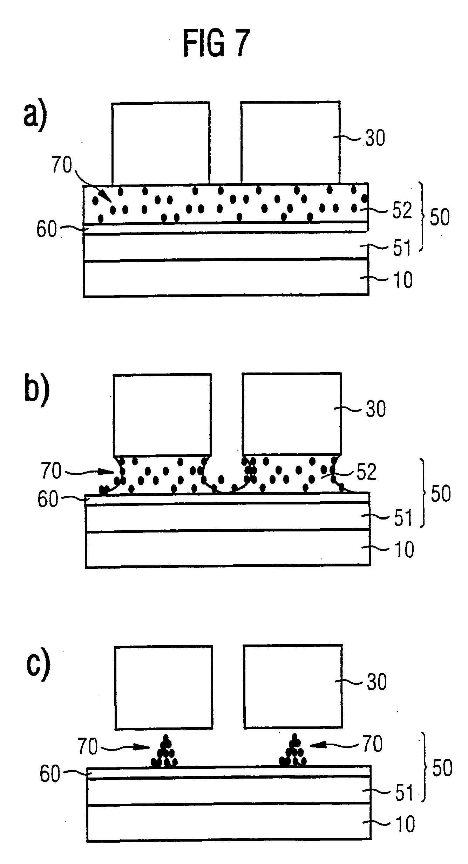

Fig. 7a-c zeigt Ausschnittsvergrößerungen von der mikromechanischen Struktur gemäß Fig. 6 unterhalb der beweglichen Balken während verschiedener Phasen des Opferschicht-Ätzprozesses.

Bei der CVD-Abscheidung des Opferoxidteilschichten 51, 52 kommt es prozessbedingt zum Einbau von Verunreinigungen 70 aus den Reaktionsprodukten, wie beispielsweise von organischen Bestandteilen in TEOS (schematisch dargestellt in Fig. 7 für die Opferteilschicht 52) oder Stickstoffeinbau in Silan-Oxid.

Dieser ungewollte Einbau verschlechtert die elektrischen Isolationseigenschaften der Opferoxidteilschichten 51, 52 nur geringfügig, so dass die mikroelektromechanischen Anwendungen davon unbeeinflusst sind.

Problematisch können Verunreinigungen 70 jedoch dann werden, wenn sie beim selektiven Ätzen der Opferschicht 50 nicht angegriffen werden oder mit dem Ätzmedium reagieren und nicht lösliche bzw. nichtflüchtige Verbindungen als Rückstände erzeugen. Diese Rückstände reichern sich beim Opferschichtätzen aus den bereits geätzten Teilen des Oxids an der SiO₂-Ätzfront an (siehe Fig. 7b). Dabei können sie vernetzen, sich zu größeren Gebilden verbinden und als feste, nicht leitende Partikel mit einer Größe bis zur Schichtdicke d1 der Opferteilschicht 51 unter der beweglichen Schwungmasse 30 auf den Elektrodenbereichen 60 zurückbleiben, auf denen sie fest haften bleiben (Fig. 7c). Hierdurch besteht die Gefahr, dass sie die Auslenkung der Schwungmasse 30 in z-Richtung blockieren bzw einen elektrischen Kurzschluß damit bilden.

In intensiven Untersuchungen stellte sich überraschender Weise heraus, dass aufgrund des Anreicherungsmechanismus an der Ätzfront (Fig. 7a-c) größere Rückstandspartikel an kritischen Bereichen entstehen, an denen beim Opferschichtätzen mehrere Ätzfronten kurz vor Prozeßende aufeinanderstoßen. Dabei bilden sich beim Aufeinandertreffen von zwei Ätzfronten nur kleine Partikel mit geringer Höhe, die für die Funktionalität von z-empfindlichen Schwungmassen 30 unkritisch sind. Laufen jedoch drei oder mehr Ätzfronten aufeinander, so können hohe Partikelstrukturen entstehen, die den mechanischen Funktionsbereich stark einschränken.

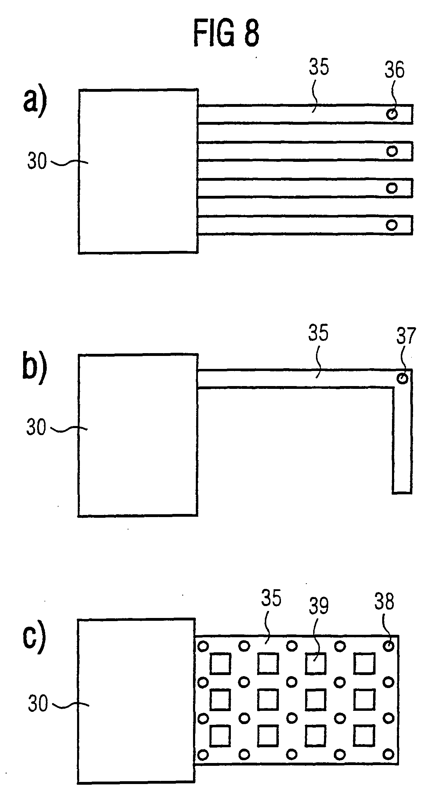

Fig. 8a-c zeigen schematische Darstellungen von kritischen Bereichen der mikromechanischen Struktur gemäß Fig. 6 bzw. 7.

Kritische Stellen in der mikromechanischen Struktur bzw. im Sensordesign, in welchen mehr als zwei Ätzfronten aufeinandertreffen, liegen
a) unter dem Ende 36 von unterätzten, freistehenden Balkenstrukturen 35 (Fig. 8a),
b) unter Knickpunkten 37 von unterätzten freistehenden Balkenstrukturen 35 (Fig. 8b),
c) unter Kreuzungspunkten 38 von unterätzten freistehenden Balkenstrukturen 35, wie sie beispielsweise durch die Löcher bzw. Zwischenräume 39 zur besseren Unterätzung entstehen (Fig. 8c).

Für vertikal empfindliche Beschleunigungs- und DrehratenSensoren werden die genannten Strukturelemente a) bis c) eingesetzt, um die mechanisch funktionale Ebene zu gestalten. Insbesondere bei großflächigen, horizontal angeordneten Kapazitätselektroden in der Funktionsschicht wird eine enge Lochung der Fläche eingesetzt, um eine ausreichende Unterätzung zu erzielen. Dabei wird bisher nur auf eine optimale Unter- bzw. Freiätzung der mechanischen Struktur geachtet, nicht aber auf mögliche Ätzrückstände.

Die Bildung von Ätzrückständen an ausgezeichneten Stellen im Sensordesign ist insbesondere bei z-empfindlichen Bauelementen problematisch, bei denen die Opferschicht 50 in einem trockenen, isotropen Ätzschritt entfernt wird. Hier können sie nicht durch eine flüssige Phase des Ätzmediums gelöst oder weggespült werden. Sie sind für die Funktionalität kritisch, wenn sie unter den elektromechanisch funktionalen Strukturen wie beispielsweise der Wippenstruktur eines z-Beschleunigungssensors liegen und ihre Größe in etwa dem Abstand der elektrisch funktionalen Schicht zur darüberliegenden elektromechanisch funktionalen Schicht entspricht.

Die der vorliegenden Erfindung zugrundeliegende Problematik liegt also in dem Auftreten von funktionsstörenden Ätzrückständen in mikromechanischen Bauelementen bzw. Strukturen.

### VORTEILE DER ERFINDUNG .

Die der vorliegenden Erfindung zugrundeliegende Idee ist, daß die Schwungmasse bestimmte Struktur mit Zwischenräumen aufweist, die durch Ätzen einer darunter liegenden Opferschicht auslenkbar gestaltbar ist. Dabei liegt die Opferschicht in einem unter der Schwungmasse befindlichen ersten Bereich in einer ersten ätzbaren Dicke vor, und in einem unter der Schwungmasse befindlichen zweiten Bereich in einer zweiten ätzbaren Dicke, wobei die zweite Dicke größer als die erste Dicke ist. Die Schwungmasse ist im ersten Bereich derart strukturiert, daß beim Ätzen zur Begrenzung der Ablagerung von Ätzrückständen nur höchstens zwei Ätzfronten aufeinandertreffen können.

Der besondere Vorteil der vorliegenden Erfindung liegt darin, daß sie eine effektive Konstruktionsmaßnahme für mikromechanische Bauelementen bzw. Strukturen zur Vermeidung von mechanisch oder elektrisch störenden Einflüssen von Ätzrückständen schafft.

Durch die Erfindung wird die Bildung von in ihrer Größe kritischen Ätzrückständen unter elektromechanisch funktionalen mikromechanischen Strukturen so gut wie ausgeschlossen. Dadurch kann erreicht werden, dass die Prozeßausbeute von freischwingenden Sensorstrukturen erhöht und ein mögliches Sicherheitsrisiko durch den Ausfall von blockierten z-empfindlichen Sensoren beispielsweise bei der Anwendung im Kraftfahrzeug erniedrigt wird.

In den abhängigen Ansprüchen finden sich vorteilhafte Weiterbildungen und Verbesserungen der in Anspruch 1 angegebenen mikromechanischen Struktur.
Gemäß einer bevorzugten Weiterbildung
Gemäß einer weiteren bevorzugten Weiterbildung

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Draufsicht auf eine erste Ausführungsform der erfindungsgemäßen mikromechanischen Struktur in Form einer Wippenstruktur, und zwar Fig. 1a in Draufsicht und Fig. 1b im Schnitt entlang der Linie A-A';
- Fig. 2: eine schematische Draufsicht auf eine zweite Ausführungsform der erfindungsgemäßen mikromechanischen Struktur in Form einer Wippenstruktur in Draufsicht, und zwar Fig. 2a für eine erste Balkengeometrie und Fig. 2b für eine zweite Balkengeometrie;
- Fig. 3: eine schematische Draufsicht auf eine dritte Ausführungsform der erfindungsgemäßen mikromechanischen Struktur in Form einer Wippenstruktur;
- Fig. 4: eine schematische Draufsicht auf eine vierte Ausführungsform der erfindungsgemäßen mikromechanischen Struktur in Form einer Wippenstruktur, und zwar Fig. 4a in Draufsicht und Fig. 4b im Schnitt entlang der Linie B-B';
- Fig: eine schematische Draufsicht auf eine fünfte Ausführungsform der erfindungsgemäßen mikromechanischen Struktur in Form einer Wippenstruktur mit Anschlag;
- Fig. 6: eine schematische Draufsicht auf eine bekannte mikromechanische Struktur in Form einer Wippenstruktur, und zwar Fig. 6a in Draufsicht und Fig. 6b im Schnitt entlang der Linie C-C';
- Fig. 7a-c: Ausschnittsvergrößerungen von der mikromechanischen Struktur gemäß Fig. 6 unterhalb der beweglichen Balken während verschiedener Phasen des Opferschicht-Ätzprozesses; und
- Fig. 8a-c: schematische Darstellungen von kritischen Bereichen der mikromechanischen Struktur gemäß Fig. 6 bzw. 7.

### BESCHREIBUNG DER AUSFÜHRUNGSBEISPIELE

In den Figuren bezeichnen gleiche Bezugszeichen gleiche oder funktionsgleiche Bestandteile.

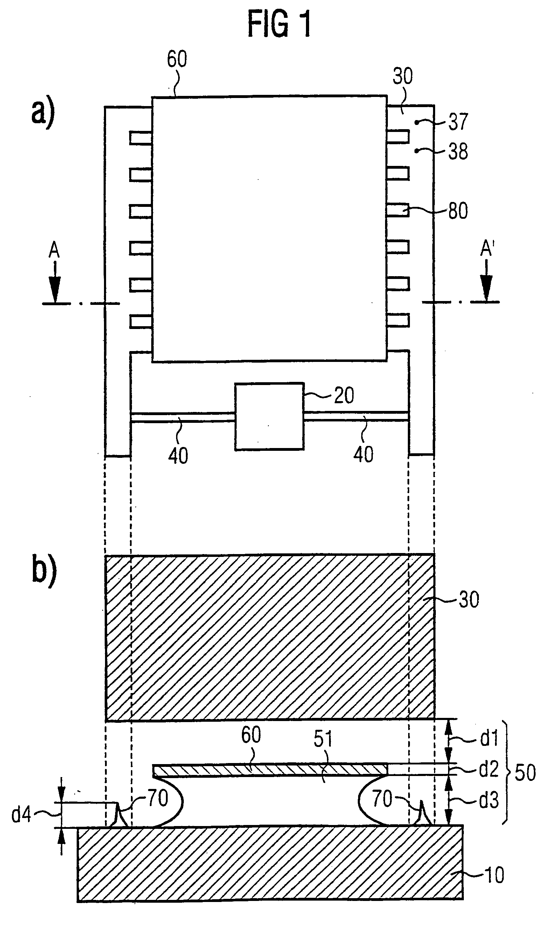

Fig. 1 zeigt eine schematische Draufsicht auf eine erste Ausführungsform der erfindungsgemäßen mikromechanischen Struktur in Form einer Wippenstruktur, und zwar Fig. 1a in Draufsicht und Fig. 1b im Schnitt entlang der Linie A-A'.

Die Struktur gemäß Fig. 1 umfaßt ein Substrat 10, welches eine Verankerungseinrichtung 20 aufweist, und eine Schwungmasse 30 in Form einer Wippe mit Längs- und Querbalken sowie entsprechenden Zwischenräumen 80, die über eine Biegefedereinrichtung 40 mit der Verankerungseinrichtung 20 verbunden ist, so daß die Schwungmasse 30 elastisch aus ihrer Ruhelage auslenkbar ist.

Wie bei der Struktur nach Fig. 6 ist die Auslenkbarkeit bei dieser Ausführungsform durch Ätzen der unter der Schwungmasse 30 liegenden Opferschicht 50 realisierbar. Die Opferschicht 50 besteht aus einer unteren Opferteilschicht 51 und einer oberen Opferteilschicht 52, zwischen denen Elektrodenbereiche 60 vorgesehen sind, welche elektrostatisch mit der Schwungmasse 30 zusammenwirken.

Durch diesen Aufbau liegt die Opferschicht 50 in einem unter der Schwungmasse 30 befindlichen ersten Bereich in einer ersten ätzbaren Dicke d1 vor, nämlich im Elektrodenbereich 60.

In einem zweiten Bereich liegt die Opferschicht 50 in einer zweiten ätzbaren Dicke d1+d2+d3 vor, wobei die zweite Dicke d1+d2+d3 größer als die erste Dicke d1 ist.

Kern dieser ersten Ausführungsform ist eine Änderung der im Stand der Technik üblichen Gestaltung von Wippe und Elektrode mit dem Ziel, endende, knickende oder sich kreuzende Balkenstrukturen in der elektromechanischen Funktionsschicht über dem Elektrodenbereich 60 in der elektrisch funktionalen Ebene zu vermeiden.

Dies wird bei dieser ersten Ausführungsform dadurch erreicht, dass die Längsbalken und die Querbalken in der Funktionsschicht über den Rand des darunterliegenden Elektrodenbereichs 60 gezogen sind, so daß die notwendigen Ecken 37 und Kreuzungen 38 der Längs- und Querbalken an Stellen liegen, an denen die Opferschicht 50, die auch hier zweischichtig aus eine= unteren Opferteilschicht 51 und einer oberen Opferteilschicht 52 (jeweils aus CVD-Oxid) besteht, deutlich größer als die Höhe d4 der Ätzrückstände 70 ist, die sich maximal auf die Dicke der unteren CVD-Opferteilschicht 51 begrenzt. Mit anderen Worten ist die DesignMaßnahme insbesondere dann wirksam, wenn die Dicke d1 der CVD-Opferteilschicht 52 in Fig. 1b kleiner oder gleich der Summe der Dicken von Schicht 51 und Schicht 60 ist, da die Schicht 51 die maximale Höhe d4 der Ätzrückstände bestimmt.

Damit entstehen zwar Ätzrückstände 70, sie werden aber auf diese Weise unter die Ebene des Elektrodenbereichs 60 abgesenkt und können damit die Wippenstruktur nicht mehr blockieren.

Ein wesentlicher Vorteil dieser Konstruktionsmaßnahme ist, dass Prozessschwankungen, die bei der Herstellung zu einer zeitlich fluktuierenden, örtlichen Verteilung von Ätzrückständen führen können, sich nicht auf die Funktionalität der Bauelemente und die Prozessausbeute auswirken, da die negativen Auswirkungen der generierten Partikel aufgrund der unkritischen Lage unwirksam gemacht werden.

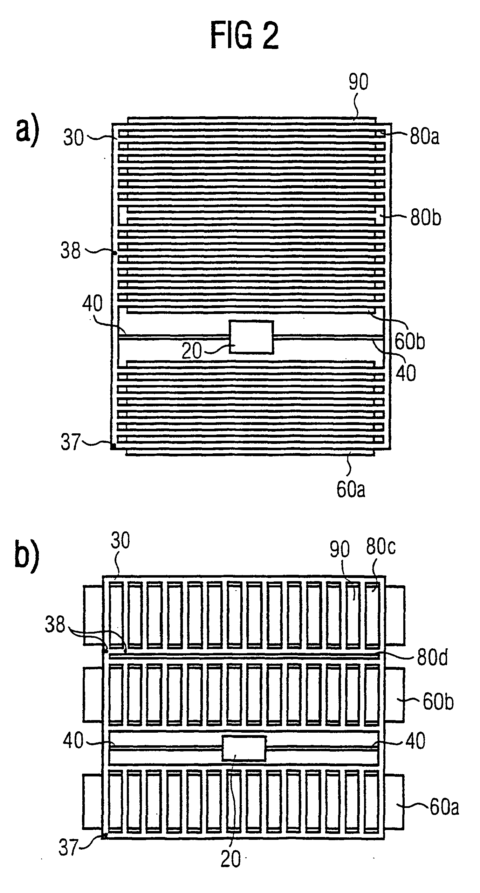

Fig. 2 zeigt eine schematische Draufsicht auf eine zweite Ausführungsform der erfindungsgemäßen mikromechanischen Struktur in Form einer Wippenstruktur in Draufsicht, und zwar Fig. 2a für eine erste Balkengeometrie und Fig. 2b für eine zweite Balkengeometrie.

Bei der zweiten Ausführungsform nach Fig. 2a liegen ein erster Elektrodenbereich 60a und ein zweiter Elektrodenbereich 60b und ein leitfähiger Abschirmelektrodenbereich 90 als elektrisch funktionale Schichten in der Leiterbahnebene unter den elektromechanisch wirksamen Strukturen. Die elektromechanisch funktionalen Komponenten bestehen aus Längsbalken und diese verbindenden Querbalken, die nicht über den Elektrodenbereichen der Leiterbahnebene, also 60a, 60b, 90 enden bzw. dort nicht knicken oder sich kreuzen. Die Eckpunkte 37 und Kreuzungspunkte 38 befinden neben den unteren Elektrodenbereichen 60a, 60b, 90.

Die Querbalken sind in Gruppen geteilt, welche jeweils über einem unteren Elektrodenbereich 60a, 60b, 90 verlaufen. Innerhalb einer Gruppe liegen kleinere Zwischenräume 80a vor als zwischen benachbarten Gruppen, wo die mit 80b bezeichneten Zwischenräume breiter sind, so daß über dem Zwischenbereich zwischen zwei unteren Elektrodenbereichen, 60b - 90, kein Querbalken verläuft.

In Fig. 2b sind die Balken innerhalb der oberen Funktionsschicht gegenüber der Anordnung in Abbildung 2a um einen Winkel von 90° gedreht angeordnet. Hier sind in Längsrichtung verlaufende Zwischenräume 80c und in Querrichtung verlaufende Zwischenräume 80d vorgesehen.

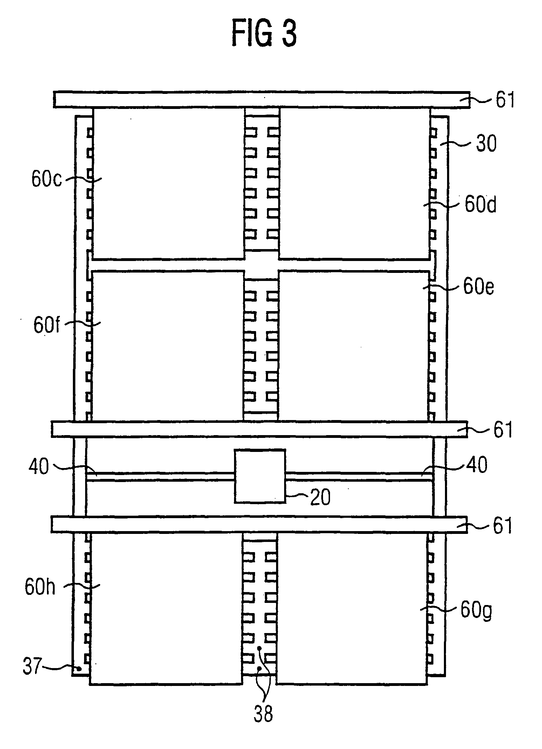

Fig. 3 zeigt eine schematische Draufsicht auf eine dritte Ausführungsform der erfindungsgemäßen mikromechanischen Struktur in Form einer Wippenstruktur.

Bei dieser weiteren Ausführungsform können die unteren Elektrodenflächen 1,2,3 unter den elektromechanischen Strukturen geteilt sein, so dass Kreuzungspunkte 38 von Querbalken der oberen Funktionsschicht über den aufgelassenen Zwischenräumen zwischen den unteren Elektrodenbereichen 60c-h liegen. Außerdem sind die Elektrodenbereiche 60c, d sowie 60e,f und 60g,h paarweise durch eine Leiterbahn 61 miteinander verbunden.

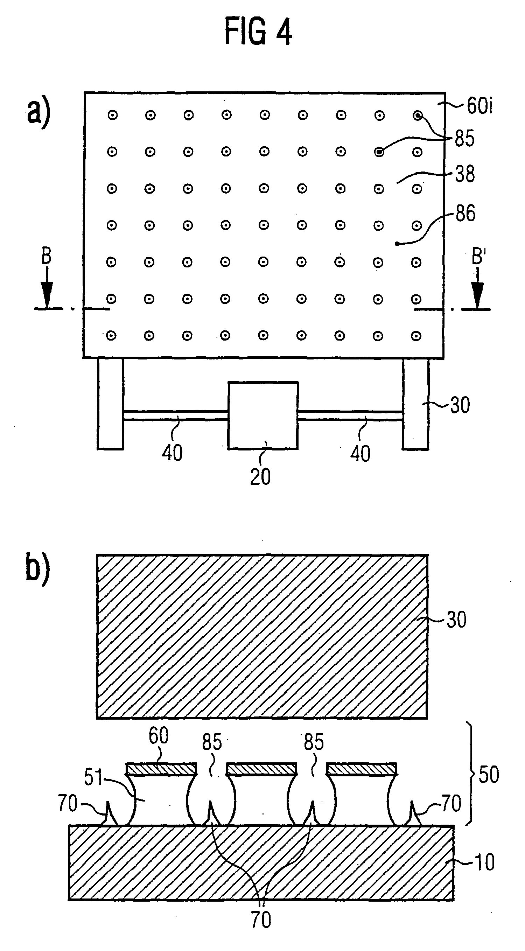

Fig. 4 zeigt eine schematische Draufsicht auf eine vierte Ausführungsform der erfindungsgemäßen mikromechanischen Struktur in Form einer Wippenstruktur, und zwar Fig. 4a in Draufsicht und Fig. 4b im Schnitt entlang der Linie B-B'.

In Fig. 4a (Draufsicht) und 4b (Querschnitt) ist gezeigt, wie eine Ausführungsform der Erfindung mit kreisförmigen Öffnungen 85 im unteren Elektrodenbereich 60i gestaltbar ist. Die Löcher 85 sind an den ausgezeichneten Stellen angeordnet, an denen Ätzrückstände von Kreuzungspunkten 38 unter der ebenfalls mit Öffnungen 86 gelochten Schwungmasse 30 zu liegen kommen. Die Rückstände 70 können in Vertiefungen in die Opferteilschicht 51 absinken und sind damit unschädlich gemacht.

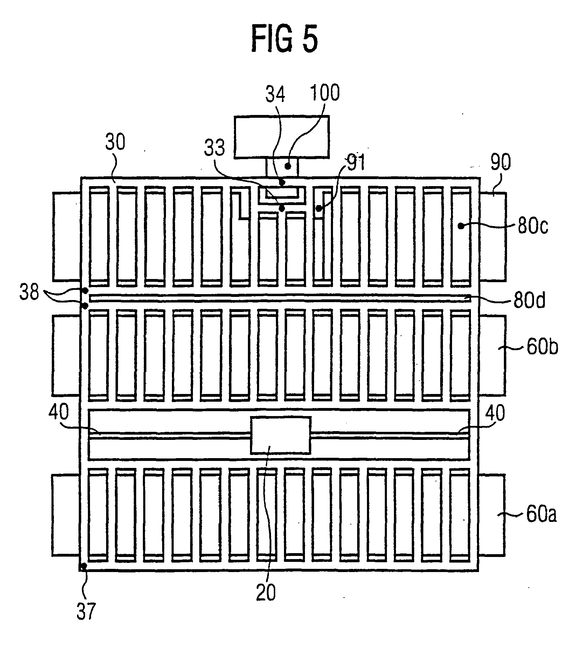

Fig. 5 zeigt eine schematische Draufsicht auf eine fünfte Ausführungsform der erfindungsgemäßen mikromechanischen Struktur in Form einer Wippenstruktur mit Anschlag.

Bei dieser Ausführungsform der Erfindung ist anhand der Struktur nach Fig. 2b aufgezeigt, wie eine mechanische Auslenkungsbegrenzung 100 in z-Richtung (vertikaler Anschlag unter der Schwungmasse 30) ausgeführt werden kann.

In den Elektrodenbereich 90 ist eine Aussparung 91 eingebracht, über der innere Balkenstrukturen 33 enden. In der Leiterbahnebene ragt eine fest an den Untergrund angebundene Anschlagfläche der mechanischen Auslenkungsbearenzung 100 unter einem Querbalken 34, die nicht unter Knicken, Enden und Kreuzungspunkten in der elektromechanisch funktionalen Struktur der Schwungmasse 30 geführt wird, in die Aussparung 91 hinein. Die Anschlagstruktur wird bei starken Beschleunigungen in z-Richtung wirksam, indem der Querbalken 34 auf der Anschlagfläche aufschlägt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Die erfindungsgemäße Designmaßnahme ist insbesondere anwendbar, wenn TEOS- oder Silan-Oxid als Opfer(teil)schicht eingesetzt werden und das Opferschichtätzen in einer HFhaltigen Gasphase stattfindet. Hierbei treten in der Regel Ätzrückstände auf, die bei CVD-Oxiddicken zwischen 0,5 µm und 2 µm kritische Durchmesser einnehmen.

Mit der angegeben Design-Regel, daß bei der Verwendung von CVD-Oxid als Opferschicht in z-empfindlichen Strukturen über der Leiterbahnebene a) keine Balkenenden, b) keine Balkenknicke und c) keine Balkenkreuzungen in der oberen Funktionsschicht auftreten sollen, lassen sich vielfältige Abwandlungen der beispielhaft gegeben Ausgestaltungen entwickeln.

Insbesondere ist die Geometrie der Struktur nicht auf die illustrierten Wippengeometrien und Elektrodengeometrien beschränkt.

Das angegebene Herstellungsverfahren ist ebenfalls nur als Beispiel zu verstehen, und andere Verfahren, wie z.B. galvanische Verfahren, können ebenfalls zu Herstellung der Struktur verwendet werden.

## Patentansprüche

1. Mikromechanische Struktur, insbesondere für einen Beschleunigungssensor oder Drehratensensor, mit:
einem Substrat (10), welches eine Verankerungseinrichtung (20) aufweist; und
einer Schwungmasse (30), die über eine Biegefedereinrichtung (40) mit der Verankerungseinrichtung (20) verbunden ist, so daß die Schwungmasse (30) elastisch aus ihrer Ruhelage auslenkbar ist;
wobei
die Schwungmasse (30) Zwischenräume aufweist und durch Ätzen einer darunter liegenden Opferschicht (50) auslenkbar gestaltbar ist;
**dadurch gekennzeichnet, daß**
die Opferschicht (50) in einem unter der Schwungmasse (30) befindlichen ersten Bereich in einer ersten ätzbaren Dicke (d1) vorliegt und in einem unter der Schwungmasse (30) befindlichen zweiten Bereich in einer zweiten ätzbaren Dicke (d1+d2+d3) vorliegt, wobei die zweite Dicke (d1+d2+d3) größer als die erste Dicke (d1) ist; und
daß
die Schwungmasse (30) im ersten Bereich derart strukturiert ist, daß beim Ätzen zur Begrenzung der Ablagerung von Ätzrückständen nur höchstens zwei Ätzfronten aufeinandertreffen können.

2. Mikromechanische Struktur nach Anspruch 1, **dadurch gekennzeichnet, daß** die Opferschicht (50) eine erste Opferteilschicht (51) und eine darüberliegende zweite Opferteilschicht (52) aufweist, wozwischen beim Ätzen der Opferschicht (50) ein nicht-ätzbarer Elektrodenbereich (60) angeordnet ist, wobei der Elektrodenbereich (60) den ersten Bereich bildet.

3. Mikromechanische Struktur nach Anspruch 1 oder 2, **dadurch gekennzeichnet, daß** im ersten Bereich keine endenden, knickenden oder sich kreuzenden Balkenstrukturen der Schwungmasse (30) vorgesehen sind.

4. Mikromechanische Struktur nach Anspruch 2 oder 3, **dadurch gekennzeichnet, daß** die Schwungmasse (30) eine Wippenstruktur mit zwei äußeren Längsbalken und einer Mehrzahl von dazwischen verlaufenden Querbalken aufweist; und daß die Längsbalken und die Querbalken über den Rand eines darunterliegenden zusammenhängenden Elektrodenbereichs (60) gezogen sind.

5. Mikromechanische Struktur nach einem der Ansprüche 2 bis 4, **dadurch gekennzeichnet, daß** der erste Bereich sich aus einer Mehrzahl nicht-zusammenhängender Elektrodenbereiche (60a-h) zusammensetzt.

6. Mikromechanische Struktur nach einem der vorhergehenden Ansprüche, **dadurch gekennzeichnet, daß** im ersten Bereich eine mechanische Anschlagsbegrenzung (100) vorgesehen ist.

7. Verfahren zur Herstellung einer mikromechanischen Struktur gemäß mindestens einem der vorhergehenden Ansprüche mit den Schritten:
Abscheiden einer ersten Opferteilschicht (51) auf dem darunterliegenden Substrat (10) mit einem CVD-Verfahren mit Schichtdicke d3;
Abscheiden und Strukturieren einer Elektrodenschicht vorzugsweise aus dotiertem Silizium mit Schichtdicke d2 auf der Opferteilschicht (51) zur Bildung der Elektrodenbereiche (60);
Abscheiden einer zweiten Opferteilschicht (52) auf den darunterliegenden Elektrodenbereichen (60) bzw. der Opferteilschicht (51) mit dem CVD-Verfahren mit Schichtdicke d1; und
Bilden der Schwungmasse (30) aus einer Epitaxieschicht vorzugsweise aus Polysilizium und Ätzen der Opferschicht (50) zur Realisierung der Auslenkbarkeit.

## Claims

1. Micromechanical structure, in particular for an acceleration sensor or rate-of-rotation sensor, having:
a substrate (10) which has an anchoring device (20); and
a flywheel mass (30) which is connected to the anchoring device (20) via a flexion spring device (40), with the result that the flywheel mass (30) can be elastically deflected from its position of rest;
the flywheel mass (30) having interspaces and being able to be configured such that it can be deflected by etching an underlying sacrificial layer (50);
**characterized in that**
the sacrificial layer (50) is present in a first etchable thickness (d1) in a first region under the flywheel mass (30) and is present in a second etchable thickness (dl+d2+d3) in a second region under the flywheel mass (30), the second thickness (dl+d2+d3) being greater than the first thickness (d1); and
**in that** the flywheel mass (30) is patterned in the first region in such a manner that only a maximum of two etching fronts can meet one another when etching in order to limit the deposition of etching residues.

2. Micromechanical structure according to Claim 1, **characterized in that** the sacrificial layer (50) has a first partial sacrificial layer (51) and a second partial sacrificial layer (52) above the latter, a non-etchable electrode region (60) being arranged between said layers during etching of the sacrificial layer (50), the electrode region (60) forming the first region.

3. Micromechanical structure according to Claim 1 or 2, **characterized in that** no bar structures of the flywheel mass (30) which end, bend or cross are provided in the first region.

4. Micromechanical structure according to Claim 2 or 3, **characterized in that** the flywheel mass (30) has a rocker structure having two outer longitudinal bars and a plurality of transverse bars which run between the latter; and **in that** the longitudinal bars and the transverse bars are pulled over the edge of an underlying contiguous electrode region (60).

5. Micromechanical structure according to one of Claims 2 to 4, **characterized in that** the first region is composed of a plurality of non-contiguous electrode regions (60a-h).

6. Micromechanical structure according to one of the preceding claims, **characterized in that** a mechanical stopping boundary (100) is provided in the first region.

7. Method for producing a micromechanical structure according to at least one of the preceding claims, said method having the steps of:
using a CVD method to deposit a first partial sacrificial layer (51) on the underlying substrate (10) with a layer thickness d3;
depositing and patterning an electrode layer, which is preferably made from doped silicon, with a layer thickness d2 on the partial sacrificial layer (51) in order to form the electrode regions (60);
using the CVD method to deposit a second partial sacrificial layer (52) on the underlying electrode regions (60) or the partial sacrificial layer (51) with a layer thickness d1; and
forming the flywheel mass (30) from an epitaxial layer, which is preferably made from polysilicon, and etching the sacrificial layer (50) in order to achieve the deflection capability.

## Revendications

1. Structure micromécanique notamment pour un capteur d'accélération ou un capteur de vitesse de rotation, comprenant:
- un substrat (10) comportant une installation d'ancrage (20), et
- une masse oscillante (30) reliée à l'installation d'ancrage (20) par l'intermédiaire d'une installation de ressorts de flexion (40) pour permettre de dévier la masse oscillante (30), élastiquement à partir de sa position de repos,
- la masse oscillante (30) a des volumes intermédiaires, et elle est réalisée de façon à pouvoir être déviée par la gravure d'une couche sacrificielle (50) située en dessous,
**caractérisée en ce que**
- la couche sacrificielle (50) se trouve dans une première zone située sous la masse oscillante (30), avec une première épaisseur (d1) qui peut être enlevée par gravure, et dans une seconde zone située sous la masse oscillante (30) dans une seconde épaisseur qui peut être dégagée par gravure (dl+d2+d3),
- la seconde épaisseur (dl+d2+d3) étant supérieure à la première épaisseur (d1), et
- la masse oscillante (30) est structurée dans la première zone de façon qu'en gravant, pour limiter les dépôts de résidus de gravure, il n'y aura au maximum que deux fronts de gravure qui se rencontrent.

2. Structure micromécanique selon la revendication 1,
**caractérisée en ce que**
la couche sacrificielle (50) comporte une première couche partielle, sacrificielle (51) et au-dessus de celle-ci une seconde couche partielle, sacrificielle (52), et entre celle-ci, pour la gravure de la couche sacrificielle (50) il y a une zone d'électrodes (60) qui ne peut être gravée, la zone d'électrodes (60) constituant la première zone.

3. Structure micromécanique selon la revendication 1 ou 2,
**caractérisée en ce que**
dans la première zone, il n'y a pas de structure en barres qui se termine, qui plie ou qui se croise pour la masse oscillante (30).

4. Structure micromécanique selon la revendication 2 ou 3,
**caractérisée en ce que**
la masse oscillante (30) a une structure de bascule à deux barres longitudinales extérieures avec plusieurs traverses entre celles-ci, et
les barres longitudinales et les traverses sont tirées par-dessus le bord d'une zone d'électrodes (60) cohérente, située en dessous.

5. Structure micromécanique selon les revendications 2 à 4,
**caractérisée en ce que**
la première zone se compose de plusieurs zones d'électrodes (60a-h) non reliées.

6. Structure micromécanique selon les revendications précédentes,
**caractérisée par**
une limitation de butée mécanique (100) dans la première zone.

7. Procédé de fabrication d'une structure micromécanique selon les revendications précédentes, comprenant les étapes suivantes:
- découpe d'une première couche partielle sacrificielle (51) sur le substrat (10) situé en dessous par un procédé de dépôt à la vapeur CVD, et ayant une épaisseur de couche d3,
- coupe et mise en structure d'une couche d'électrodes de préférence en silicium dopé ayant une épaisseur de couche d2 sur la couche partielle sacrificielle (51) pour former la zone d'électrodes (60),
- découpe d'une seconde couche sacrificielle partielle (52) sur la zone d'électrodes (60) située en dessous ou la couche partielle sacrificielle (51) selon le procédé CVD avec une épaisseur de couche d1, et
- on forme la masse oscillante (30) à partir d'une couche épitaxiale de préférence de polysilicium et on grave la couche sacrificielle (50) pour réaliser la possibilité de débattement.
